# EUROPÄISCHE PATENTSCHRIFT

(11) **EP 1 284 090 B1**
(45) Veröffentlichungstag und Bekanntmachung des Hinweises auf die Patenterteilung: **16.12.2009**
(21) Anmeldenummer: 01947155.6
(22) Anmeldetag: 17.05.2001
(51) Int. Cl.: H04W 4/12, H04M 3/42

(54) **MOBILFUNKNETZ-SEITIGER SERVER FÜR EIN MOBILFUNKENDGERÄT-MENÜ**
MOBILE RADIOTELEPHONE NETWORK-SIDE SERVER FOR A MOBILE RADIOTELEPHONE TERMINAL MENU
SERVEUR DU RESEAU RADIO DU SERVICE MOBILE DESTINE A UN MENU DU TERMINAL MOBILE EMETTEUR-RECEPTEUR

(30) Priorität: 23.05.2000 DE 10027146
(43) Veröffentlichungstag der Anmeldung: 19.02.2003
(73) Patentinhaber: Vodafone Holding GmbH, 40213 Düsseldorf (DE)
(72) Erfinder: JOUSSEN, Fritz, 47057 Duisburg (DE)
(74) Vertreter: Meissner, Peter E.
(86) Internationale Anmeldenummer: PCT/DE2001/001937
(87) Internationale Veröffentlichungsnummer: WO 2001/091484

(56) Entgegenhaltungen:
- EP-A- 0 812 120
- WO-A-00/01193
- WO-A-00/07385
- PATENT ABSTRACTS OF JAPAN vol. 1999, no. 12, 29. Oktober 1999 (1999-10-29) & JP 11 187155 A (MITSUBISHI ELECTRIC CORP), 9. Juli 1999 (1999-07-09)

## Beschreibung

Die Erfindung betrifft ein Verfahren und eine Vorrichtung zum Ermöglichen eines Mobilfunkendgerät-seitigen Zugriffs auf ein Menü.

Gemäß dem GSM-Standard (wie auch gemäß anderen Standards wie UMTS etc.) sind Mobilfunkendgeräte für Mobilfunkteilnehmer individuelle Mobilfunkteilenehmer Zugangskarten (SIM = Subscriber Identity Module) bekannt Programme und sonstige Daten zu Mobilfunkendgerät-seitig für einen Mobilfunkendgerät-Nutzer zugänglichen Menüs sind bisher in der Regel im Mobilfunkendgerät gespeichert. Derartige Menüs können beispielsweise die Auswahl aus mehreren möglichen Mobilfunknetzen beim Roaming, die Suche nach einer Telefonnummer in einem (Nutzer-individuellen und/oder teilweise vorgegebenen) Telefonbuch (welches wiederum teilweise in der SIM-Karte gespeichert sein kann), die Einstellung von Funktionen des Mobilfunkendgerätes umfassen. Die in der Regel Mobilfunkendgerät-seitig gespeicherten Menüstrukturen sind dabei bei unterschiedlichen Endgeräten, insbesondere bei Endgeräten unterschiedlicher Hersteller verschieden aufgebaut. Dies ist für einen Mobilfunkendgerät-Nutzer unergonomisch.

Die Schrift WO-A-00/01193 betrifft ein Verfahren zum Ermöglichen eines Mobüfunkgerät-seitigen Zugriffs auf ein Menü, wobei das Menü repräsentierende Daten in einem über ein Mobilfunknetz zugänglichen Rechner gespeichert sind und vom Rechner über das Mobilfunknetz an das Mobilfunkendgerät übertragen werden.

In EP-A-0812 120 ist beschrieben, dass in einem zellularen Funknetz Netzdienste mit einer intelligenten Karte in Anspruch genommen werden können, die der Teilnehmer von dem Netzbetreiber erhält. Auf dem Festspeicher der im Endgerät eingesetzten Karte kann der Teilnehmer über das Netz empfangene Daten, wie z.B. Textnachrichten, abspeichem.

Gemäß der Schrift WO-A-00/07385 werden ein Kommunikationssystem und ein Verfahren zum Bereitstellen von Menüdaten unter Verwendung eines Kommunikationsnetzes beschrieben.
Das Kommunikationsnetz enthält einen Server, der Menüdaten an eine mobile Einheit überträgt. Die mobile Einheit beinhaltet eine Benutzerschnittstelle, die die Menüoptionen anzeigt.
Ziel der Erfindung ist eine möglichst einfache und effiziente Realisierung eines für einen Mobilfunkendgerät-Nutzer ergonomischeren Menüs. Das Ziel wird jeweils durch die Gegenstände der unabhängigen Ansprüche 1 und 11 erreicht.

Die Erfindung erlaubt einen ergonomischen Zugriff auf Menüs. Die Menüs betreffen insbesondere Anrufumleitungen, Konferenzschaltung, Management von Textnachrichten (Kurznachrichten/emails), Kalenderfunktionen, Anruflisten (von eingegangenen Anruf-Versuchen), Adressbuchfunktionen (Telefonnummern, email (Adressnummern) Bookmarks (für Internet. Mobilfunkinternet etc.)).

Der erfindungsgemäße Mobilfunkendgerät-seitige Menü-Zugriff über ein Mobilfunknetz zu einem Menü-Server erlaubt es, für einen Mobilfunkendgerät-Nutzer und/oder für eine Mobilfunkteilnehmeridentitätskarte in einem Server mindestens eine individuelle Variante der Struktur mindestens eines Menüs abzuspeichem. Damit kann für einen Mobilfunkendgerät-Nutzer und/oder eine Mobilfunkteilnehmeridentifikationskarte der Aufbau (Hauptmenü, Untermenüs, Untermenüpunkte) eines Menüs abgespeichert werden, welches dem Mobilfunkendgerät-Nutzer (bzw. dem Nutzer der Mobilfunkteilnehmeridentifikationskarte) unabhängig davon zur Verfügung steht, mit welchem Mobilfunkendgerät er sich in ein Mobilfunknetz einbucht. Dies ist sehr ergonomisch, weil der Mobilfunkendgerät-Nutzer sich damit bei Verwendung unterschiedlicher Mobilfunkendgeräte nicht auf die jeweilige Mobilfunkendgerät-Menüstruktur umstellen muss.

Der Zugriff vom Mobilfunkendgerät über das Mobilfunknetz auf ein Menü kann in unterschiedlichster Weise realisiert werden. So ist es möglich ein Programm und/oder Parameter-Daten zu einem Menü an das Mobilfunkendgerät bei dessen Einbuchung in ein Netz und/oder bei einem versuchten Zugriff auf ein Menü z.B. als Skript in das Mobilfunkendgerät herunterzuladen und dort ablaufen zu lassen. Menüdaten können in unterschiedlichster Form an ein Mobilfunkendgerät übertragen werden, beispielsweise per WAP, GPRS, SMS etc. unter unterschiedlichsten Mobilfunk-Protokollen.

Weitere Merkmale und Vorteile der Erfindung ergeben sich aus den Ansprüchen und der nachfolgenden Beschreibung eines Ausführungsbeispiels anhand der Zeichnung.

Dabei zeigt:

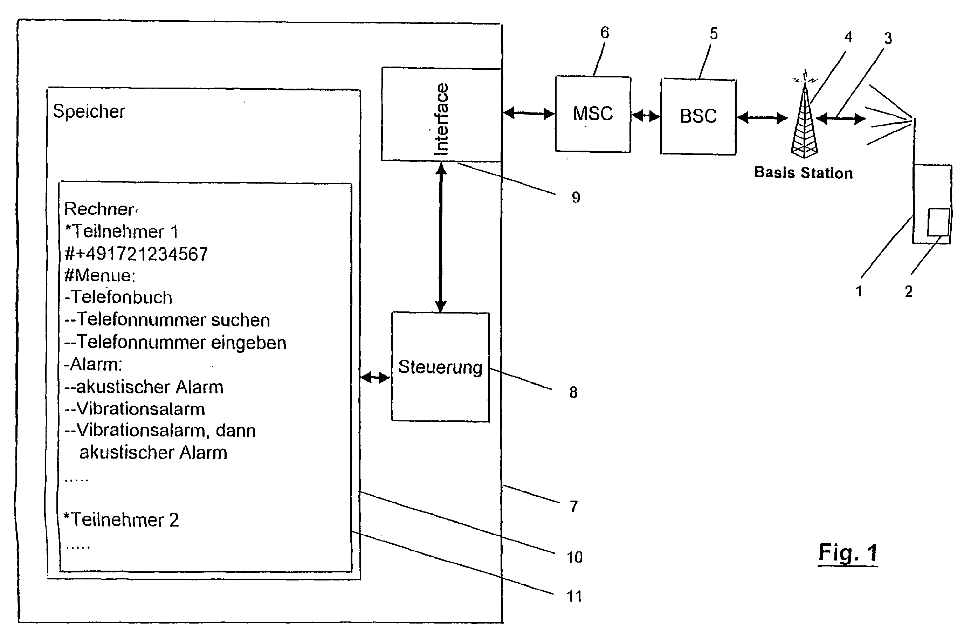

Fig. 1 als Blockschaltbild schematisch eine erfindungsgemäße Speicherung eines Menüs in einem über ein Mobilfunknetz zugänglichen Server.

Figur 1 zeigt ein Mobilfunkendgerät 1 mit einer Mobilfunkteilnehmeridentifikationskarte 2 (beispielsweise gemäß GSM Standard, UMTS-Standard etc.). Das Mobilfunkendgerät 1 kommuniziert über eine Luftschnittstelle Um 3, eine Basisstation 4, BSC 5, MSC 6 usw. mit einem Server (Rechner) 7. Wenn sich das Mobilfunkendgerät 1 in das Mobilfunknetz einwählt oder wenn der Benutzer des Mobilfunkendgerätes 1 (über Tasten oder akustisch) auf ein Menü (beispielsweise Telefonbuch-Menü über eine Kurzwahltaste) zugreifen möchte, wird er über das Mobilfunknetz mit dem Rechner 7 verbunden. Der nur schematisch dargestellte Rechner 7 umfasst eine Steuerung 8, ein Interface 9, einen Speicher 10 mit Dateien 11 betreffend Menüs. Wenn von einer Mobilstation 1 beim Rechner 7 ein Menü angefragt wird oder beim Einbuchen in das Mobilfunknetz, veranlasst der Rechner 7 (bzw. dessen Steuerung 8) die Übermittlung von Daten-(Programm- und/oder Parameter-Daten) aus der Menü-Datei 11 im Speicher 10 des Rechners 7 per Mobilfunk (4 - 6) an die Mobilstation 1, nachdem deren Identität (beispielsweise aufgrund der Mobilfunkteilnehmer Telefonnummer-Clip) im Rechner überprüft wurde.

Dies ist in unterschiedlichster Weise realisierbar. So können Daten aus der Menüdatei 11 in einer Form an das Endgerät 1 übermittelt werden, welche die (Programm- und Parameter-) Daten des Menüs im Endgerät 1 (oder der SIM 2) als Programm ablaufen lassen. Dies ist beispielsweise unter WAP möglich. Ein das Menü darstellendes Programm kann ganz oder teilweise in der Mobilstation 1 ablaufen. Die vom Rechner (per WAP etc.) an das Mobilfunkendgerät 1 übertragenen Daten repräsentieren hierein Programm, welches im Mobilfunkendgerät und/oder der SIM abläuft und welches ein Menü in einer vom Nutzer vorgegebenen Struktur darstellt und bearbeitet.

Ein Menü kann insbesondere das umfassen, was bisher in unterschiedlichen Mobilfunkendgeräten an Menüpunkten und Funktionen vorgesehen ist. Beispielsweise kann ein Menü für einen Mobilfunkendgerät-Nutzer Funktionen betreffend insbesondere Anrufumleitungen, Konferenzschaltung, Management von Textnachrichten (Kurznachrichten/emails), Kalenderfunktionen, Anruflisten (von eingegangenen Anruf-Versuchen), Adressbuchfunktionen (Telefonnummem, email (Adressnummem) Bookmarks (für Internet, Mobilfunkintemet etc.)) umfassen. Ein Menü kann in mehreren Ebenen strukturiert sein, so dass zum Menüpunkt Telefonbuch beispielsweise die Menüpunkte "Nummer suchen" und "neue Nummer eingeben" usw. vorgesehen sind. Neben Menüpunkten, welche eine Anfrage der Mobilstation aus Daten (welche ebenfalls in der Menüdatei 11 gespeichert sein können und/oder in der Mobilstation 1 und/oder der SIM 2 gespeichert sein können) umfassen. Ein Menüpunkt kann auch die Einstellung von Funktionen in der Mobilstation 1 umfassen.

## Patentansprüche

1. Verfahren zum Ermöglichen eines Mobilfunkendgerät- seitigen (1, 2) Zugriffs (3 - 6) auf ein Menü, wobei das Menü repräsentierende Daten (11) in einem über ein Mobilfunknetz (3 - 6) zugänglichen Rechner (7) gespeichert sind und vom Rechner über das Mobilfunknetz (3 - 6) an das Mobilfunkendgerät übertragen werden,
**dadurch gekennzeichnet,**
**dass** der Rechner (7) über mehrere Mobilfunknetze per Mobilfunk erreichbar ist und dass die Übertragung von Menüdaten vom Rechner (7) an das Mobilfunkendgerät automatisch bei der Einwahl eines Mobilfunkendgerätes in ein Mobilfunknetz (3 - 6) über welches der Rechner (7) zugänglich ist, erfolgt

2. Verfahren nach Anspruch 1,
**dadurch gekennzeichnet,**
**dass** im Rechner (7) gespeicherte Menüdaten (11) zumindest Teile eines Programmes repräsentierende Programmdaten umfassen.

3. Verfahren nach einem der vorhergehenden Ansprüche,
**dadurch gekennzeichnet,**
**dass** im Rechner (7) gespeicherte Menüdaten (11) auch Parameterdaten, insbesondere Einstellungen eines Mobilfunkendgerätes (2) betreffende Parameterdaten umfassen.

4. Verfahren nach einem der vorhergehenden Ansprüche,
**dadurch gekennzeichnet,**
**dass** das in der Menüdatei (11) repräsentierte Menü mehrere Menüebenen umfasst.

5. Verfahren nach einem der vorhergehenden Ansprüche,
**dadurch gekennzeichnet,**
**dass** Daten der Menüdatei (11) vom Rechner (7) per Mobilfunk an das Mobilfunkendgerät übertragen werden und das Menü als Programm zumindest teilweise im Mobilfunkendgerät abläuft.

6. Verfahren nach einem der vorhergehenden Ansprüche,
**dadurch gekennzeichnet,**
**dass** die Übertragung von Menüdaten (11) per Mobilfunk an das Endgerät per Kurznachricht, GPRS oder WAP erfolgt.

7. Verfahren nach einem der vorhergehenden Ansprüche,
**dadurch gekennzeichnet,**
**dass** Menüdaten als JAVA-Applet übertragen werden.

8. Verfahren nach einem der vorhergehenden Ansprüche,
**dadurch gekennzeichnet,**
**dass** das Menü ein Abfrageprogramm für ein Telefonbuch und/oder Einstellung des Mobilfunkendgerätes (1,2) und/oder ein bevorzugtes Mobilfunknetz (3 - 6) umfasst.

9. Verfahren nach einem der vorhergehenden Ansprüche,
**dadurch gekennzeichnet,**
**dass** zumindest Teile des Menüs, insbesondere der Menüstruktur, vom Nutzer einer Mobilstation (1, 2) festlegbar sind und in der festgelegten Form gespeichert (11) werden.

10. Verfahren nach einem der vorhergehenden Ansprüche,
**dadurch gekennzeichnet,**
**dass** zumindest Teile des Menüs als Preset für alle Mobilfunknutzer vorgegeben sind.

11. Vorrichtung zur Durchführung der einzelnen Schritte des Verfahrens nach einem der vorhergehenden Ansprüche
- bestehend zumindest aus einem für ein Mobilfunkendgerät (1, 2) über ein Mobilfunknetz
(3 - 6) zugänglichen Rechner (7),
- welcher Rechner (7) einen Speicher (10) mit Menüdaten (11) betreffend den Aufbau eines Menüs für das Mobiifunkendgerät (1, 2) umfasst,
- wobei der Rechner (7) (8) zur Übermittlung von Menüdaten (11) per Mobilfunk (3-6) an das Mobilfunkendgerät (1, 2) ausgebildet (8, 9) ist,
**dadurch gekennzeichnet,**
**dass** der Rechner (7) über mehrere Mobilfunknetze per Mobilfunk erreichbar ist, und dass Mittel vorhanden sind, die die Übertragung von Menüdaten vom Rechner an das Mobilfunkendgerät automatisch bei der Einwahl eines Mobilfunkendgerätes in ein Mobilfunknetz (3 - 6) über welches der Rechner (7) zugänglich ist, bewirken.

12. Vorrichtung nach einem der vorhergehenden Ansprüche,
**dadurch gekennzeichnet,**
**dass** im Rechner 7 gespeicherte Menüdaten (11) zumindest Teile eines Programmes repräsentierende Programmdaten umfasst.

13. Vorrichtung nach einem der vorhergehenden Ansprüche,
**dadurch gekennzeichnet,**
**dass** im Rechner (7) gespeicherte Menüdaten (11) Parameterdaten, insbesondere Einstellungen eines Mobilfunkendgerätes (2) betreffende Parameterdaten, umfassen.

14. Vorrichtung nach einem der vorhergehenden Ansprüche,
**dadurch gekennzeichnet,**
**dass** das in der Menüdatei (11) repräsentierte Menü mehrere Menüebenen umfasst.

15. Vorrichtung nach einem der vorhergehenden Ansprüche,
**dadurch gekennzeichnet,**
**dass** der Rechner so aufgebaut ist, dass Programmdaten und/oder Parameterdaten der Menüdatei (11) im Server (7) zum Ermöglichen eines Zugriffs des Mobilfunkendgerätes per Mobilfunk an dieses übertragen werden und das Menü als Programm zumindest teilweise auf dem Mobilfunkendgerät abläuft

16. Vorrichtung nach einem der vorhergehenden Ansprüche,
**dadurch gekennzeichnet,**
**dass** sie die Übertragung von Menüdaten (11) per Mobilfunk an das Endgerät per Kurznachricht, GPRS oder WAP ermöglicht.

17. Vorrichtung nach einem der vorhergehenden Ansprüche,
**dadurch gekennzeichnet,**
**dass** sie die Übertragung von Menüdaten als JA VA-Applet ermöglicht.

18. Vorrichtung nach einem der vorhergehenden Ansprüche,
**dadurch gekennzeichnet,**
**dass** das Menü ein Programm für ein Telefonbuch und/oder Einstellungen des Mobilfunkendgerätes (1, 2) und/oder ein bevorzugtes Mobilfunknetz (3 - 6) betrifft

19. Vorrichtung nach einem der vorhergehenden Ansprüche,
**dadurch gekennzeichnet,**
**dass** zumindest Teile des Menüs, insbesondere der Menüstruktur, vom Nutzer einer Mobilstation (1, 2) festlegbar und in der festgelegten Form speicherbar (11) sind.

20. Vorrichtung nach einem der vorhergehenden Ansprüche,
**dadurch gekennzeichnet,**
**dass** zumindest Teile des Menüs als Preset für alle Mobilfunknutzer vorgegeben sind.

21. Vorrichtung nach einem der vorhergehenden Ansprüche,
**dadurch gekennzeichnet,**
**dass** das Menü Bookmarks betrifft.

22. Vorrichtung nach einem der vorhergehenden Ansprüche,
**dadurch gekennzeichnet,**
**dass** das Menü das Management, insbesondere Weiterleiten von Textnachrichten, insbesondere emails und/oder Kurznachrichten betrifft.

23. Vorrichtung nach einem der vorhergehenden Ansprüche,
**dadurch gekennzeichnet,**
**dass** das Menü Kalenderfunktionen betrifft.

24. Vorrichtung nach einem der vorhergehenden Ansprüche,
**dadurch gekennzeichnet,**
**dass** das Menü Anrufumleitungs-Einstellungen betrifft.

25. Vorrichtung nach einem der vorhergehenden Ansprüche,
**dadurch gekennzeichnet,**
**dass** das Menü Einstellungen zur Anruferlistenbearbeitung betrifft.

## Claims

1. Method for enabling mobile radio terminal-side (1, 2) access (3 - 6) to a menu, data (11) which represent the menu being stored in a computer (7) accessible via a mobile radio network (3 - 6) and being transmitted from the computer to the mobile radio terminal via the mobile radio network (3 - 6),
**characterised**
**in that** the computer (7) can be reached via a plurality of mobile radio networks by mobile radio and
**in that** the transmission of menu data from the computer (7) to the mobile radio terminal is effected automatically when a mobile radio terminal is dialled into a mobile radio network (3 - 6) via which the computer (7) is accessible.

2. Method according to Claim 1,
**characterised**
**in that** menu data (11) stored in the computer (7) comprise program data representing at least parts of a program.

3. Method according to one of the preceding claims,
**characterised**
**in that** menu data (11) stored in the computer (7) also comprise parameter data, in particular parameter data relating to settings of a mobile radio terminal (2).

4. Method according to one of the preceding claims,
**characterised**
**in that** the menu represented in the menu file (11) comprises a plurality of menu levels.

5. Method according to one of the preceding claims,
**characterised**
**in that** data of the menu file (11) are transmitted from the computer (7) to the mobile radio terminal by mobile radio and the menu runs as a program at least partly in the mobile radio terminal.

6. Method according to one of the preceding claims,
**characterised**
**in that** the transmission of menu data (11) to the terminal by mobile radio is effected by short message, GPRS or WAP.

7. Method according to one of the preceding claims,
**characterised**
**in that** menu data are transmitted as JAVA applets.

8. Method according to one of the preceding claims,
**characterised**
**in that** the menu comprises an inquiry program for a telephone book and/or setting of the mobile radio terminal (1, 2) and/or a preferred mobile radio network (3 - 6).

9. Method according to one of the preceding claims,
**characterised**
**in that** at least parts of the menu, in particular of the menu structure, can be defined by the user of a mobile station (1, 2) and are stored (11) in the defined form.

10. Method according to one of the preceding claims,
**characterised**
**in that** at least parts of the menu are predetermined as presets for all mobile radio users.

11. Apparatus for carrying out the individual steps of the method according to one of the preceding claims
- consisting at least of a computer (7) accessible to a mobile radio terminal (1, 2) via a mobile radio network (3 - 6),
- which computer (7) comprises a memory (10) with menu data (11) relating to the structure of a menu for the mobile radio terminal (1, 2),
- the computer (7)(8) being designed (8, 9) to
transmit menu data (11) to the mobile radio terminal (1, 2) by mobile radio (3 - 6),
**characterised**
**in that** the computer (7) can be reached via a plurality of mobile radio networks by mobile radio, and
**in that** means are present which effect the transmission of menu data from the computer to the mobile radio terminal automatically when a mobile radio terminal is dialled into a mobile radio network (3 - 6) via which the computer (7) is accessible.

12. Apparatus according to one of the preceding claims,
**characterised**
**in that** menu data (11) stored in the computer (7) comprise program data representing at least parts of a program.

13. Apparatus according to one of the preceding claims,
**characterised**
**in that** menu data (11) stored in the computer (7) comprise parameter data, in particular parameter data relating to settings of a mobile radio terminal (2).

14. Apparatus according to one of the preceding claims,
**characterised**
**in that** the menu represented in the menu file (11) comprises a plurality of menu levels.

15. Apparatus according to one of the preceding claims,
**characterised**
**in that** the computer is constructed in such a manner that program data and/or parameter data of the menu file (11) in the server (7) are transmitted by mobile radio to the mobile radio terminal in order to enable access of the latter and the menu runs as a program at least partly on the mobile radio terminal.

16. Apparatus according to one of the preceding claims,
**characterised**
**in that** it enables the transmission of menu data (11) to the terminal by mobile radio by short message, GPRS or WAP.

17. Apparatus according to one of the preceding claims,
**characterised**
**in that** it enables the transmission of menu data as JAVA applets.

18. Apparatus according to one of the preceding claims,
**characterised**
**in that** the menu relates to a program for a telephone book and/or settings of the mobile radio terminal (1, 2) and/or a preferred mobile radio network (3 - 6).

19. Apparatus according to one of the preceding claims,
**characterised**
**in that** at least parts of the menu, in particular of the menu structure, can be defined by the user of a mobile station (1, 2) and stored (11) in the defined form.

20. Apparatus according to one of the preceding claims,
**characterised**
**in that** at least parts of the menu are predetermined as presets for all mobile radio users.

21. Apparatus according to one of the preceding claims,
**characterised**
**in that** the menu relates to bookmarks.

22. Apparatus according to one of the preceding claims,
**characterised**
**in that** the menu relates to the management, in particular forwarding of text messages, in particular emails and/or short messages.

23. Apparatus according to one of the preceding claims,
**characterised**
**in that** the menu relates to calendar functions.

24. Apparatus according to one of the preceding claims,
**characterised**
**in that** the menu relates to call-diversion settings.

25. Apparatus according to one of the preceding claims,
**characterised**
**in that** the menu relates to settings for caller list editing.

## Revendications

1. Procédé pour permettre un accès (3 - 6) d'un terminal mobile émetteur-récepteur (1, 2) à un menu, dans lequel on mémorise des données (11) représentant le menu dans un calculateur (7) accessible au moyen d'un réseau radio du service mobile (3 - 6) et on les transmet du calculateur au terminal mobile émetteur-récepteur au moyen du réseau radio du service mobile (3 - 6), **caractérisé en ce que** le calculateur (7) est accessible par radio du service mobile au moyen de plusieurs réseaux radio du service mobile et **en ce que** la transmission de données de menu du calculateur (7) au terminal mobile émetteur-récepteur est effectuée automatiquement par la mise en communication d'un terminal mobile émetteur-récepteur dans un réseau radio du service mobile (3 - 6) par lequel le calculateur (7) est accessible.

2. Procédé selon la revendication 1, **caractérisé en ce que** des données de menu (11) mémorisées dans le calculateur (7) comprennent des données de programme représentant au moins des parties d'un programme.

3. Procédé selon l'une quelconque des revendications précédentes, **caractérisé en ce que** des données de menu (11) mémorisées dans le calculateur (7) comprennent aussi des données de paramètres, en particulier des données de paramètres concernant des réglages d'un terminal mobile émetteur-récepteur (2).

4. Procédé selon l'une quelconque des revendications précédentes, **caractérisé en ce que** le menu représenté dans le fichier de menu (11) comprend plusieurs plans de menu.

5. Procédé selon l'une quelconque des revendications précédentes, **caractérisé en ce que** des données du fichier de menu (11) sont transmises du calculateur (7) au terminal mobile émetteur-récepteur par radio du service mobile et le menu est exécuté comme programme au moins partiellement dans le terminal mobile émetteur-récepteur.

6. Procédé selon l'une quelconque des revendications précédentes, **caractérisé en ce que** la transmission de données de menu (11) est effectuée par radio du service mobile au terminal par message court [SMS], GPRS [Service Paquets Radio Général] ou WAP [Protocole pour les Applications sans Fil].

7. Procédé selon l'une quelconque des revendications précédentes, **caractérisé en ce que** des données de menu sont transmises sous la forme de composants programmatiques JAVA.

8. Procédé selon l'une quelconque des revendications précédentes, **caractérisé en ce que** le menu comprend un programme d'interrogation pour un annuaire téléphonique et/ou le réglage du terminal mobile émetteur-récepteur (1, 2) et/ou un réseau radio du service mobile préféré (3 - 6).

9. Procédé selon l'une quelconque des revendications précédentes, **caractérisé en ce qu'**au moins des parties du menu, en particulier de la structure du menu, peuvent être fixées par l'utilisateur d'une station mobile (1, 2) et sont mémorisées sous la forme fixée (11).

10. Procédé selon l'une quelconque des revendications précédentes, **caractérisé en ce qu'**au moins des parties du menu sont prédéterminées comme prédéfinition pour tous les utilisateurs du réseau du service mobile.

11. Dispositif pour la mise en oeuvre des étapes individuelles du procédé selon l'une quelconque des revendications précédentes,
- se composant au moins d'un calculateur (7) accessible à partir d'un terminal mobile émetteur-récepteur (1, 2) via un réseau radio du service mobile (3 - 6),
- calculateur (7) qui comprend une mémoire (10) avec des données de menu (11) concernant la structure d'un menu pour le terminal mobile émetteur-récepteur (1, 2),
- dans lequel le calculateur (7)(8) est réalisé (8, 9) en vue de transmettre des données de menu (11) par radio du service mobile (3 - 6) au terminal mobile émetteur-récepteur (1, 2)
**caractérisé en ce que** le calculateur (7) est accessible par radio du service mobile au moyen de plusieurs réseaux radio du service mobile, et **en ce qu'**il comprend des moyens qui assurent automatiquement la transmission de données de menu du calculateur au terminal mobile émetteur-récepteur lors de la mise en communication d'un terminal mobile émetteur-récepteur dans un réseau radio du service mobile (3 - 6) par lequel le calculateur (7) est accessible.

12. Dispositif selon la revendication 11, **caractérisé en ce que** des données de menu (11) mémorisées dans le calculateur (7) comprennent des données de programme représentant au moins des parties d'un programme.

13. Dispositif selon l'une quelconque des revendications précédentes, **caractérisé en ce que** des données de menu (11) mémorisées dans le calculateur (7) comprennent aussi des données de paramètres, en particulier des données de paramètres concernant des réglages d'un terminal mobile émetteur-récepteur (2).

14. Dispositif selon l'une quelconque des revendications précédentes, **caractérisé en ce que** le menu représenté dans le fichier de menu (11) comprend plusieurs plans de menu.

15. Dispositif selon l'une quelconque des revendications précédentes, **caractérisé en ce que** le calculateur est construit de telle manière que des données de programme et/ou des données de paramètres du fichier de menu (11) dans le serveur (7) soient transmises par radio du service mobile au terminal mobile émetteur-récepteur pour permettre un accès de ce dernier et que le menu soit exécuté comme programme au moins partiellement dans le terminal mobile émetteur-récepteur.

16. Dispositif selon l'une quelconque des revendications précédentes, **caractérisé en ce qu'**il permet la transmission de données de menu (11) par radio du service mobile au terminal par message court [SMS], GPRS [Service Paquets Radio Général] ou WAP [Protocole pour les Applications sans Fil].

17. Dispositif selon l'une quelconque des revendications précédentes, **caractérisé en ce qu'**il permet la transmission de données de menu sous la forme de composants programmatiques JAVA.

18. Dispositif selon l'une quelconque des revendications précédentes, **caractérisé en ce que** le menu concerne un programme d'interrogation pour un annuaire téléphonique et/ou des réglages du terminal mobile émetteur-récepteur (1, 2) et/ou un réseau radio du service mobile préféré (3 - 6).

19. Dispositif selon l'une quelconque des revendications précédentes, **caractérisé en ce qu'**au moins des parties du menu, en particulier de la structure du menu, peuvent être fixées par l'utilisateur d'une station mobile (1, 2) et peuvent être mémorisées sous la forme fixée (11).

20. Dispositif selon l'une quelconque des revendications précédentes, **caractérisé en ce qu'**au moins des parties du menu sont prédéterminées comme prédéfinition pour tous les utilisateurs du réseau du service mobile.

21. Dispositif selon l'une quelconque des revendications précédentes, **caractérisé en ce que** le menu concerne des signets.

22. Dispositif selon l'une quelconque des revendications précédentes, **caractérisé en ce que** le menu concerne la gestion, en particulier la retransmission de messages textuels, en particulier de courriels et/ou de messages courts.

23. Dispositif selon l'une quelconque des revendications précédentes, **caractérisé en ce que** le menu concerne des fonctions de calendrier.

24. Dispositif selon l'une quelconque des revendications précédentes, **caractérisé en ce que** le menu concerne des réglages de déviation d'appel.

25. Dispositif selon l'une quelconque des revendications précédentes, **caractérisé en ce que** le menu concerne des réglages pour le traitement de la liste des correspondants.
